# EUROPEAN PATENT SPECIFICATION

(11) **EP 4 002 991 B1**
(45) Date of publication and mention of the grant of the patent: **05.06.2024**
(21) Application number: 20848818.9
(22) Date of filing: 28.12.2020
(51) Int. Cl.: A01G 24/25, A01G 24/44, A01G 24/50, A01G 24/60, A01G 24/20, A01G 20/00

(54) **LAWN AMENDMENT AND PACKAGING**
RASENVERBESSERUNGSMITTEL UND VERPACKUNG
AMENDEMENT DE PELOUSE ET EMBALLAGE

(30) Priority: 09.06.2020 US 202016897006
(43) Date of publication of application: 01.06.2022
(73) Proprietor: Proseeds Marketing, Inc., Jefferson, Oregon 97352 (US)
(72) Inventor: HOFF, Cindy A., Jefferson, Oregon 97532 (US)
(74) Representative: Dickerson, David
(86) International application number: PCT/US2020/067136
(87) International publication number: WO 2021/252018

(56) References cited:
- EP-A1- 2 772 131
- DE-A1-102017 102 081
- GB-A- 2 543 968
- US-A1- 2005 097 816
- US-A1- 2009 113 791
- US-A1- 2011 094 154

## Description

### FIELD

The invention relates to soil amendments for lawn care. More specifically, the invention relates to ingredients and packaging suited to repair small areas of cosmetic damage that are often suffered by residential lawns.

### BACKGROUND

Many outdoor areas that are regularly maintained are planted with a low, uniform cover crop like grass or clover. These areas, which may be referred to generally as "lawns," "turf," "meadows" or "fields," are often used for organized field sports (soccer, baseball, football) or general recreational purposes (running, children's play). One frequent use is for exercise and play of domestic animals, particularly dogs.

Most dogs are trained to continence, but a common purpose for "walking a dog" is to allow the dog to relieve itself out-of-doors. Besides urination and defecation, dogs "mark" locations by urinating on them. Dog urine and feces are among the most common causes of injuries suffered by lawns and fields, even though many dog owners clean up after their dogs when they might be observed.

Urine damage, in particular, tends to kill cover plants such as grass, leaving undesired brown spots. Other hazards, such as herbicide (weed killer) overspray, moles and gophers digging holes, weather conditions and insects or disease can cause similar cosmetic damage.

An easily-portable and -distributable lawn-repair substance could be of significant value to dog-walkers and others who use or care for regularly-maintained lawns and fields.

Further information pertaining to the prior art can be found in US 2011/0094154 that discloses a self-contained garden growing system that employs a plurality of modular growing sections, each having a pre-determined length of porous tubular sock material filled with growing medium for plants therein, and having a modular length of irrigation tube installed lengthwise through the growing sock. The opposite ends of the tube have male and female coupling fittings so that a plurality of sections can be coupled together in series, with each growing sock locked in position by the shoulders of the coupling fittings at its opposite ends. The modular sections are of a plurality of types for accommodating different types of plants, volumes of growing medium, and/or watering volumes. The different types of sections each can deliver a pre-determined volume of water that is a multiple of a basic watering volume for the sections, thereby facilitating easy computation of the number and types of sections that can be coupled together in a series for a given water source.

EP 2 772 131 A1 discloses a pad that has a dried and compressed fiber cushion based on coco peat and/or coir with a water content of maximum 20 wt. %, an area in a range from 100 to 1000 square cm, a thickness of lesser than 1 cm in a compressed state, and a thickness increased to three times after water addition and expansion. Turf seeds are inserted in the fiber cushion or applied on the fiber cushion. Fertilizer granules are inserted in the fiber cushion or applied on the fiber cushion. A length of the fiber cushion is about one to three times of a breadth of the cushion. The granules contain isobutylidene di urea. It also discloses a method for manufacturing a turf pad.

US 2005/0097816 discloses a golf course divot repair device having a hand transportable, pliable, and water-soluble container with a mixture of a specified grass seed and soil mixture disposed in the container in proportions to propagate seed germination which can be placed in a golf divot and activated.

DE 10 2017 102 081 discloses a seed material unit comprising a tablet of compressed, water-absorbing material, seed material, optionally fertilizer pellets, and an encasement of the tablet and the seed material of a water-soluble, synthetic material. It also discloses a method of manufacturing a seed material unit.

### SUMMARY

The present invention provides a turf repair pod in accordance with independent claim 1 and a method in accordance with independent claim 11. Preferred embodiments of the invention are reflected in the dependent claims.

An embodiment of the invention is a self-contained "single-serving" module containing fertilizer, plant seeds and other ingredients for repairing bare and damaged spots on manicured lawns. Each module or pod contains sufficient material to treat about 100cm²~500cm² (15~80 square inches) of turf. The ingredients are held together by a biodegradable covering which deteriorates quickly under normal environmental conditions (sun, water / rain) to release the ingredients over the treatment area. Some embodiments include specific chemicals to neutralize turf-killing components of urine, so they are particularly suitable for use by dog owners cleaning up after their pets.

### BRIEF DESCRIPTION OF DRAWINGS

Figure 1 shows a sample embodiment of the invention.
Figure 2 shows another sample embodiment of the invention.

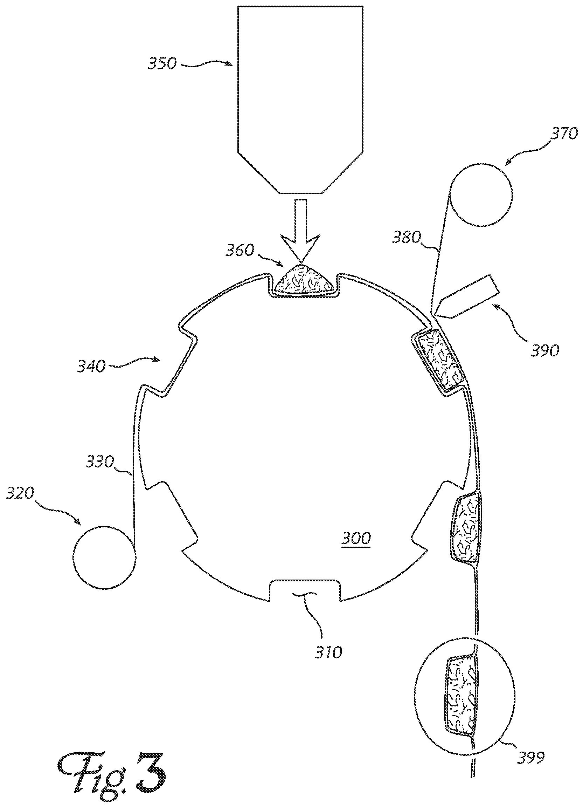

Figure 3 shows a packaging system for manufacturing pods according to an embodiment.

### DETAILED DESCRIPTION

Embodiments of the invention are pre-measured, portable lawn-care pods that are easy to store, easy to carry and easy to apply without touching the pod contents. Each pod may be about 37cc (1.25 fluid ounces) in volume, and at that size, contains about 30g of the ingredients described below.

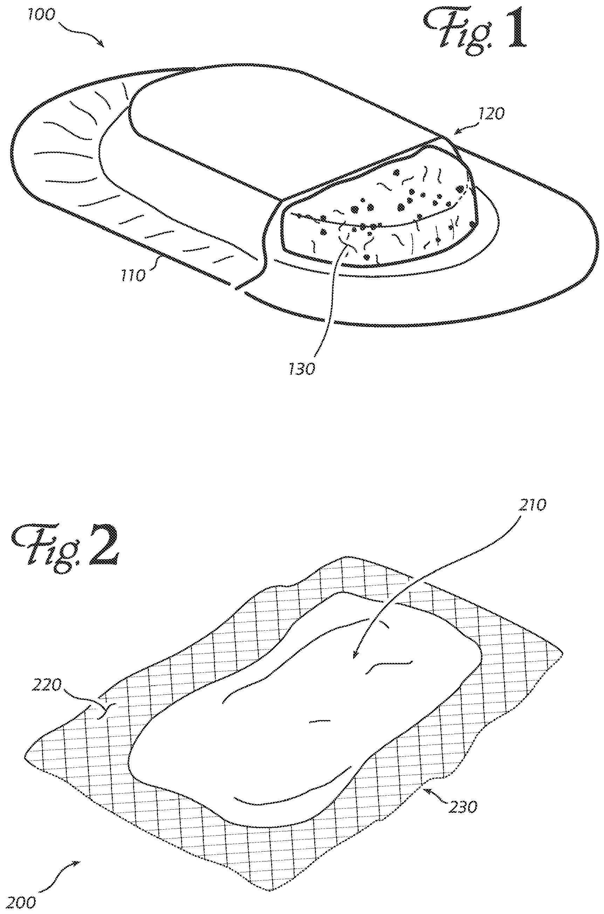

Figure 1 shows a sample "pod" 100 according to an embodiment of the invention 100. The pod may be a relatively thin, oblong object comprising an outer covering 110, which has been partly cut away in this illustration at 120 to expose the active ingredients 130. The contents are generally granular, so they would pour out rather than retain the shape of the pod covering as shown here. The outer covering 110 is made of a biodegradable material that ruptures or deteriorates upon exposure to water. It may also be somewhat impact-sensitive, so that it can be broken open by stepping on it. When the covering is breached, the granules inside are exposed. This embodiment may be about 5cm x 7.5cm (2 inches x 3 inches) and 12~19mm (0.5∼0.75 inches) thick (volume of about 45∼60cc (1.6∼2.0 fluid ounces)).

Figure 2 shows another sample pod 200 according to an embodiment of the invention. This may be a larger instance, for example about 9cm x 20cm (3.5 inches x 8 inches) and about 1.2cm (0.5 inches) thick. The central portion 210 contains the active ingredients (with a volume of about 230cc (7.75 fluid ounces)), while the cross-hatched area 220 indicates where the pod's upper and lower covering surfaces are bonded together. Pods may be made in a linear or rectangular array, with each pod separated from its neighbors by perforations through the bonded cover layers. Dashed lines 230 show where the depicted pod has been torn away from other pods in such an array.

Generally, a thin, flat pod (overall thickness 12∼25mm (0.5∼1.0 inches)) is preferred over a different shape containing the same volume of ingredients.

Each pod contains a number of ingredients, many of which may be in granular form. The ingredients are mixed with a volume expander - a material that increases in volume once released or exposed from the covering. In many embodiments, the volume expander is water-activated: when moistened, the volume expander increases in size, distributing the other ingredients over a larger area. Many embodiments will use compressed coir, or coconut husk fiber, as a volume expander. This material is relatively inexpensive, tough, biodegradable, can be highly compressed, and expands well when wet. The moisture-absorbing characteristics of the volume expander are also helpful to draw moisture to the area where the pod was placed, for the benefit of plants and seeds at that location. A water-activated volume expander that absorbs at least five times its weight is preferred.

The coir (or other volume expander) is mixed with ingredients chosen for their ability to repair or promote growth of turf. For example, a natural fertilizer such as chicken litter (*a.k.a.* dry chicken waste) is included in most embodiments. Nutri-pel, a pelletized fertilizer derived from bio-solids, is another acceptable alternative.

The inventor has also tested other fertilizers, such as soy-based granular 5-5-5 NPK fertilizer, but determined that this material did not expand well with the volume expander, and tended to mold when watered so that the grass seed did not germinate well. Chicken litter is the preferred ingredient for fertilizer, and Nutri-pel is an acceptable substitute.

Black gypsum granules with humic acid are present in many embodiments. This material is helpful to repair "burned" spots caused by animal urine. Calcium is another ingredient frequently present in an embodiment. It functions as an alkaline buffer to neutralize some acids, such as uric acid, that may be present in the soil. The calcium, gypsum and humic acid are soil improvers so they will benefit lawn growth generally, even when applied to a spot that was not damaged by urine or another cause.

Grass seeds may be mixed with the other ingredients in a pod. The seeds may be coated a hygroscopic material, micro-nutrients and microorganisms to improve germination and growth. Seed coatings can be colored, and when the colored seeds are visible through a transparent or translucent pod skin, pods with seeds for different species of turf can be distinguished.

Pods similar in form and construction to the turf-repair pods described above, but with the following differences, are also within the inventor's contemplation. Pods may be made with seeds of other plants, rather than grass or turf seeds. For example, pods containing one type, or an assortment, of flower seeds (*e.g*., wildflower seeds) may be useful for seeding and initial growth of a flower garden, or to add color to an existing garden with little effort. Pods containing vegetable seeds, herb seeds, or a combination thereof, can reduce the time and effort necessary to start a vegetable garden. And pods containing hemp seeds (along with the volume expander and suitable fertilizers and soil amendments) may be helpful for starting less-robust strains of those plants.

Generally, pods may be manufactured in a number of different varieties, corresponding to different species of grass or plant seeds contained therein, and different fertilizer mixes and soil amendments to suit different growing zones (*c*.*f*. United States Department of Agriculture *Plant Hardiness Zone Map*)*.*

Turf-repair pods may be configured to "spot-treat" a small area of a lawn. Areas from about 60cm² to about 160cm² (9 square inches to about 25 square inches) are ideal for this treatment method. Compressed coir absorbs about ten times its weight in water, so pods containing active ingredients from about 20g to about 150g (about 0.75 ounces to about 7.5 ounces) are appropriate. A pod that covers a flat area of from about 60cm² to about 160cm² (9 square inches to about 25 square inches) and has a thickness of about 6mm to 12mm (¼ inch to ½ inch) is a convenient form factor for these intended uses. Smaller packages, such as spherical or oblate pods with a volume of, *e.g*., 5 to 20cc, may be useful to distribute a handful at a time. These "mini" pods contain a similar volume expander mixed with fertilizer, seeds and other ingredients, surrounded by a biodegradable outer covering that ruptures on exposure to water, and which may also be mechanically broken by stepping on it.

### Pod Covering

The skin of an embodiment of the invention may be made from a biodegradable, water-soluble plastic such as polyvinyl alcohol ("PVOH," "PVA" or "PVAI") having a thickness of about 0.038mm (1.5 mil). The film has pores or small perforations that permit air exchange to help maintain seed viability. An alternate material that has been investigated is a biodegradable paper (trade name SmartSolve^{®}, a registered trademark of CMC Group, Inc. of Bowling Green, Ohio). These materials are capable of holding the contents of a pod together securely, and releasing them upon exposure to water or mechanical stress.

### Pod Contents

A lawn repair pod according to a preferred embodiment contains:
- Compressed coir (12.48g)

Compressed coir (coconut husk fiber) is suitable for use as the volume expander in an embodiment. In one particular embodiment, the volume expander should absorb at least five times its weight in water.

An embodiment's water-disruptable covering may be PVOH film. This film may have pores, perforations, or both. Another embodiment's water-disruptable covering may be a water-soluble paper.

Regardless of the covering material, an embodiment should contain at least 10cc of turf repair material but less than 60cc of turf repair material. A convenient size of embodiment contains about 37cc of turf repair material.

The physical dimensions of a turf repair pod of an embodiment may be such that the pod has a flat surface area of about 40cm² and a thickness of about 8mm. Ideally, an embodiment contains an amount of volume expander so that the granular turf-repair material is distributed over an area of about 130cm² when the volume expander is activated.

A turf-repair pod according to an embodiment may be manufactured by mixing a plurality of materials including a water-activated volume expander and at least one ingredient selected from the group consisting of plant seeds, natural fertilizer, black gypsum, humic acid, and calcium to form a dry granulated mixture; encapsulating the dry, granulated mixture within a water-disruptable covering to form a soil-amendment pod; and packing a plurality of such soil-amendment pods in a moisture-resistant container.

The manufacturing method may be characterized in comprising at least two ingredients selected from the group consisting of plant seeds, natural fertilizer, black gypsum, humic acid, and calcium. The plant seeds in a manufacturing method may be grass seeds. Alternatively, they may be one of flower seeds, wildflower seeds, vegetable seeds, herb seeds or hemp seeds.

A turf-repair pod produced via this manufacturing method may contain between 45cc and 230cc of the dry, granulated mixture. It may be between 10mm and 25mm thick.

A particular embodiment of the invention may be a turf repair pod comprising 12g of compressed coir, 11g of dry poultry waste, 4g of plant seeds, 0.5g of black gypsum with humic acid, and 0.85g of calcium, wherein the compressed coir, dry poultry waste, plant seeds, black gypsum with humic acid and calcium are sealed into a water-disruptable covering formed from a polyvinyl alcohol ("PVA") film having a thickness of 0.038mm (1.5 mil) and perforations over its surface, said turf repair pod having an overall thickness of between 10mm and 20mm.

## Claims

1. A turf repair pod (100) comprising:
a water-activated volume expander;
a granular material distributed through the volume expander so that grains of the granular material move away from each other if the volume expander is activated; and
a water-disruptable covering (110) surrounding the volume expander and the granular material, said covering effective to prevent the volume expander from expanding until the water-disruptable covering is breached, wherein
the water-disruptable covering is of a biodegradable material that deteriorates upon exposure to water,
the volume expander absorbs at least five times its weight in water, and
the granular material includes at least one ingredient selected from the group consisting of:
grass seeds,
natural fertilizer,
black gypsum,
humic acid, and
calcium,
said water-activated volume expander and granular material together forming a turf-repair material (130).

2. The turf repair pod of claim 1, further comprising:
an alkaline buffer to neutralize an acid present at a turf surface.

3. The turf repair pod of claim 1, wherein the volume expander is compressed coir. claim 1,

4. The turf repair pod of wherein the water-disruptable covering is PVOH film.

5. The turf repair pod of claim 4, wherein the PVOH film has pores or perforations.

6. The turf repair pod of claim 1, wherein the water-disruptable covering is water-soluble paper.

7. The turf repair pod of claim 1, wherein the water-disruptable covering contains at least 10cc of turf repair material and less than 60cc of turf repair material.

8. The turf repair pod of claim 1, having a flat area of about 40cm² and a thickness of about 8mm.

9. The turf repair pod of any one of claim 1, wherein the volume expander distributes the granular material over an area of about 130cm² when the volume expander is activated.

10. The turf repair pod of claim 1, wherein the granular material comprises:
12g of compressed coir;
11 g of dry poultry waste;
4g of plant seeds;
0.5g of black gypsum with humic acid; and
0.85g of calcium, wherein
the compressed coir, dry poultry waste, plant seeds, black gypsum with humic acid and calcium are sealed into the water-disruptable covering,
the water-disruptable covering is formed from a polyvinyl alcohol film having a thickness of 0.038 mm and perforations over its surface, and
said turf repair pod has an overall thickness of between 10mm and 20mm.

11. A method comprising:
mixing a plurality of materials including a water-activated volume expander and at least two ingredients selected from the group consisting of plant seeds, natural fertilizer, black gypsum, humic acid, and calcium to form a dry granulated mixture (130);
encapsulating the dry, granulated mixture within a water-disruptable covering (110) to form a soil-amendment pod (100); and
packing a plurality of soil-amendment pods in a moisture-resistant container, wherein
the water-disruptable covering is of a biodegradable material that deteriorates upon exposure to water, and
the volume expander absorbs at least five times its weight in water.

12. The method of claim 11, wherein the plant seeds are one of grass seeds, flower seeds, wildflower seeds, vegetable seeds, herb seeds or hemp seeds.

13. The method of claim 11, wherein each soil-amendment pod contains between 45cc and 230cc of the dry, granulated mixture.

14. The method of claim 11, wherein each soil-amendment pod is between 10mm and 25mm thick.

## Patentansprüche

1. Grasnarbenreparaturkapsel (100), die aufweist:
einen durch Wasser aktivierten Volumenaufweiter;
ein Granulat, das in der Weise über den Volumenaufweiter verteilt ist, dass sich die Körner des Granulats voneinander wegbewegen, falls der Volumenaufweiter aktiviert wird; und
eine durch Wasser zersetzbare Abdeckung (110), die den Volumenaufweiter und das Granulat umgibt, wobei die Abdeckung bewirkt, dass verhindert wird, dass sich der Volumenaufweiter aufweitet, bis die durch Wasser zersetzbare Abdeckung durchbrochen wird, wobei
die durch Wasser zersetzbare Abdeckung aus einem biologisch abbaubaren Material besteht, das verrottet, wenn dieses Wasser ausgesetzt ist,
wobei der Volumenaufweiter wenigstens das Fünffache seines Gewichts in Wasser absorbiert, und
das Granulat wenigstens einen Bestandteil enthält, der aus der Gruppe gewählt ist, die besteht aus:
Grassamen,
Naturdünger,
schwarzem Gips,
Huminsäure, und
Calcium,
wobei der durch Wasser aktivierte Volumenaufweiter und das Granulat zusammen ein Grasnarbenreparaturmaterial (130) bilden.

2. Grasnarbenreparaturkapsel nach Anspruch 1, die ferner aufweist:
einen alkalischen Puffer zum Neutralisieren einer an einer Grasnarbenoberfläche vorhandenen Säure.

3. Grasnarbenreparaturkapsel nach Anspruch 1, wobei der Volumenaufweiter komprimierte Kokosfaser ist.

4. Grasnarbenreparaturkapsel nach Anspruch 1, wobei die durch Wasser zersetzbare Abdeckung ein PVOH-Film ist.

5. Grasnarbenreparaturkapsel nach Anspruch 4, wobei der PVOH-Film Poren oder Perforationen aufweist.

6. Grasnarbenreparaturkapsel nach Anspruch 1, wobei die durch Wasser zersetzbare Abdeckung wasserlösliches Papier ist.

7. Grasnarbenreparaturkapsel nach Anspruch 1, wobei die durch Wasser zersetzbare Abdeckung wenigstens 10 cm³ Grasnarbenreparaturmaterial und weniger als 60 cm³ Grasnarbenreparaturmaterial enthält.

8. Grasnarbenreparaturkapsel nach Anspruch 1, die einen flachen Bereich von etwa 40 cm² und eine Dicke von etwa 8 mm aufweist.

9. Grasnarbenreparaturkapsel nach Anspruch 1, wobei der Volumenaufweiter das Granulat über einen Bereich von etwa 130 cm² verteilt, wenn der Volumenaufweiter aktiviert wird.

10. Grasnarbenreparaturkapsel nach Anspruch 1, wobei
das Granulat aufweist:
12 g komprimierte Kokosfaser;
11 g trockenen Geflügelabfall;
4 g Pflanzensamen;
0,5 g schwarzen Gips mit Huminsäure; und
0,85 g Calcium, wobei
die komprimierte Kokosfaser, der trockene Geflügelabfall, die Pflanzensamen, der schwarze Gips mit Huminsäure und das Calcium in einer durch Wasser zersetzbaren Abdeckung abgedichtet sind,
die durch Wasser zersetzbare Abdeckung aus einem Polyvinylalkoholfilm mit einer Dicke von 0,038 mm und mit Perforationen über ihre Oberfläche gebildet ist, und
die Grasnarbenreparaturkapsel eine Gesamtdicke zwischen 10 mm und 20 mm aufweist.

11. Verfahren, das aufweist:
Mischen mehrerer Materialien, die einen durch Wasser aktivierten Volumenaufweiter und wenigstens zwei Bestandteile, die aus der Gruppe gewählt werden, die aus Pflanzensamen, Naturdünger, schwarzem Gips, Huminsäure und Calcium besteht, enthalten, um ein trockenes granuliertes Gemisch (130) zu bilden;
Kapseln des trockenen granulierten Gemischs in einer durch Wasser zersetzbaren Abdeckung (110), um eine Bodenverbesserungskapsel (100) zu bilden; und
Packen mehrerer Bodenverbesserungskapseln in einen feuchtebeständigen Behälter, wobei
die durch Wasser zersetzbare Abdeckung aus einem biologisch abbaubaren Material besteht, das verwittert, wenn dieses Wasser ausgesetzt ist, und
der Volumenaufweiter wenigstens das Fünffache seines Gewichts in Wasser absorbiert.

12. Verfahren nach Anspruch 11, wobei die Pflanzensamen Grassamen oder Blumensamen oder Wildblumensamen oder Gemüsesamen oder Krautsamen oder Hanfsamen sind.

13. Verfahren nach Anspruch 11, wobei jede Bodenverbesserungskapsel zwischen 45 cm³ und 230 cm³ des trockenen granulierten Gemischs enthält.

14. Verfahren nach Anspruch 11, wobei jede Bodenverbesserungskapsel zwischen 10 mm und 25 mm dick ist.

## Revendications

1. Un pack de réparation du gazon (100) comprenant :
un expanseur de volume activé avec de l'eau ;
un matériau granulaire réparti dans l'expanseur de volume de manière à ce que les grains du matériau granulaire s'éloignent les uns des autres lorsque l'expanseur de volume est activé ; et
une couverture imperméable à l'eau (110) enveloppant l'expanseur de volume et le matériau granulaire, ladite couverture étant efficace pour empêcher l'expanseur de volume de s'étendre jusqu'à ce que la couverture imperméable à l'eau soit rompue,
la couverture imperméable à l'eau étant constituée d'un matériau biodégradable qui se détériore au contact de l'eau,
l'expanseur de volume absorbant au moins cinq fois son poids en eau, et
le matériau granulaire comprenant au moins un ingrédient choisi dans le groupe constitué de :
graines de gazon,
engrais naturel,
gypse noir,
acide humique, et
calcium,
ledit expanseur de volume activé avec de l'eau et le matériau granulaire formant ensemble un matériau de réparation du gazon (130).

2. Le pack de réparation du gazon selon la revendication 1, comprenant en outre :
un tampon alcalin pour neutraliser un acide présent sur une surface de gazon.

3. Le pack de réparation du gazon selon la revendication 1, dans lequel l'expanseur de volume est du coco compressé.

4. Le pack de réparation du gazon selon la revendication 1, dans lequel la couverture imperméable à l'eau est un film PVOH.

5. Le pack de réparation du gazon selon la revendication 4, dans lequel le film PVOH présente des pores ou des perforations.

6. Le pack de réparation du gazon selon la revendication 1, dans lequel la couverture imperméable à l'eau est un papier soluble dans l'eau.

7. Le pack de réparation du gazon selon la revendication 1, dans lequel la couverture imperméable à l'eau contient au moins 10 cm³ de matériau de réparation du gazon et moins de 60 cm³ de matériau de réparation du gazon.

8. Le pack de réparation du gazon selon la revendication 1, ayant une surface plane d'environ 40 cm² et une épaisseur d'environ 8 mm.

9. Le pack de réparation du gazon selon l'une des revendications 1, dans lequel l'expanseur de volume répartit le matériau granulaire sur une surface d'environ 130 cm² lorsque l'expanseur de volume est activé.

10. Le pack de réparation du gazon selon la revendication 1, dans lequel
le matériau granulaire comprend :
12 g de coco compressé ;
11 g de déchets de volaille secs ;
4 g de graines de plantes ;
0,5 g de gypse noir avec de l'acide humique ; et
0,85 g de calcium,
le coco compressé, les déchets de volaille secs, les graines de plantes, le gypse noir contenant de l'acide humique et le calcium étant scellés dans la couverture imperméable à l'eau,
la couverture imperméable à l'eau étant constituée d'un film d'alcool polyvinylique d'une épaisseur de 0,038 mm et perforé sur toute sa surface, et
ledit pack de réparation du gazon ayant une épaisseur totale comprise entre 10 mm et 20 mm.

11. Un procédé comprenant :
le mélange de plusieurs matériaux, dont un expanseur de volume activé avec de l'eau et au moins deux ingrédients choisis dans le groupe constitué de graines végétales, d'engrais naturel, de gypse noir, d'acide humique et de calcium, pour former un mélange granulé sec (130) ;
l'enveloppage du mélange granulé sec dans une couverture imperméable à l'eau (110) pour former un pack d'amendement du sol (100) ; et
le conditionnement de plusieurs packs d'amendement du sol dans un conteneur résistant à l'humidité,
la couverture imperméable à l'eau étant constituée d'un matériau biodégradable qui se détériore au contact de l'eau.

12. Le procédé selon la revendication 11, dans lequel les graines de plantes sont des graines d'herbe, de fleurs, de fleurs sauvages, de légumes, d'herbes potagères ou de chanvre.

13. Le procédé selon la revendication 11, dans lequel chaque pack d'amendement du sol contient entre 45 cm³ et 230 cm³ de mélange granulé sec.

14. Le procédé selon la revendication 11, dans lequel chaque pack d'amendement du sol a une épaisseur comprise entre 10 mm et 25 mm.
